# EUROPEAN PATENT SPECIFICATION

(11) **EP 2 106 538 B1**
(45) Date of publication and mention of the grant of the patent: **05.05.2010**
(21) Application number: 08701925.3
(22) Date of filing: 25.01.2008
(51) Int. Cl.: G01J 3/44, G01J 3/28, G01N 21/65

(54) **SPECTROSCOPIC APPARATUS AND METHODS**
SPEKTROSKOPISCHE VORRICHTUNG UND ENTSPRECHENDE VERFAHREN
APPAREIL ET PROCÉDÉS SPECTROSCOPIQUES

(30) Priority: 25.01.2007 GB 0701477
(43) Date of publication of application: 07.10.2009
(73) Proprietor: Renishaw PLC, Wotton-Under-Edge Gloucestershire GL12 8JR (GB)
(72) Inventor: BENNETT, Robert, Gloucestershire GL10 3TT (GB)
(74) Representative: Dunn, Paul Edward
(86) International application number: PCT/GB2008/000252
(87) International publication number: WO 2008/090350

(56) References cited:
- BOWDEN M ET AL: "Line-scanned micro Raman spectroscopy using a cooled CCD imaging detector" Journal of Raman Spectroscopy UK, vol. 21, no. 1, 1990, pages 37-41, XP002483938 ISSN: 0377-0486
- PITT G D ET AL: "Engineering aspects and applications of the new Raman instrumentation" IEE Proceedings-Science, Measurement and Technology IEE UK, vol. 152, no. 6, 2005, pages 241-318, XP002483939 ISSN: 1350-2344

## Description

### Field of the Invention

This invention relates to spectroscopic apparatus and methods. It is particularly useful in Raman spectroscopy, though it can equally be used in other forms of spectroscopy, e.g. using fluorescence, narrow-line photoluminescence or cathodoluminescence.

### Description of Prior Art

An example of Raman spectroscopic apparatus is shown in US Patent No. 5,442,438 (Batchelder et al). Light from a laser source is focussed to a spot on a sample. Interaction between the light and the molecules of the sample causes Raman scattering into a spectrum having frequencies and wavenumbers which are shifted relative to the exciting laser frequency. After filtering out the laser frequency, a dispersive device such as a diffraction grating disperses this scattered Raman spectrum across a two-dimensional photodetector array, e.g. in the form of a charge-coupled device (CCD). Different molecular species have different characteristic Raman spectra, and so the effect can be used to analyse the molecular species present. The Raman spectrum can also give other information, such as the local stresses or strains in the sample.

Related prior art is disclosed in M. Bowden et al., J. of Raman Spectroscopy UK, vol. 21 (1990) p. 37-41 and G.D. Pitt et al., IEE Proceedings-Science, Measurement and Technology IEE UK, vol. 152, no. 6 (2005) p.241-318.

If it is desired to map an area of the sample, rather than just a single point, then it is known to mount the sample on a stage which can be moved in orthogonal directions X, Y. Alternatively, movable mirrors may deflect the light beam across the surface of the sample in X and Y directions. Thus, a raster scan of the sample can take place, giving Raman spectra at each point in the scan.

At each point in such a raster scan, the laser beam must illuminate the sample for a sufficient length of time to allow a Raman spectrum to be acquired. Obtaining a map over a large area of the sample can therefore be time consuming.

It is therefore known to illuminate the sample not with a point focus, but with a line focus. This enables the acquisition of spectra from multiple points within the line simultaneously. On the CCD detector, it is arranged that an image of the line extends orthogonally to the direction of spectral dispersion. This enables efficient use of the two-dimensional nature of the detector to acquire the multiple spectra simultaneously. The'multiple spectra are formed simultaneously in multiple rows or columns of the CCD array.

One problem with such a line focus arrangement is that inevitably the illuminating laser light will have different intensities at different positions along the line. The resulting spectra from the different positions within the line are therefore not normalised relative to each other and are difficult to compare directly.

Where a large area of the sample is to be mapped, it is also quite likely that the length of the line will be only a fraction of the width or depth of the area to be mapped. Consequently, even such a line focus must undertake a raster scan, in a series of successive stripes. When assembling the resulting stripes into a two-dimensional map of the area, there are difficulties in seamlessly stitching together the data at the ends of the line focus.

These difficulties in stitching the data together have several different causes. One cause is the above difference in intensity at different positions along the line focus. Indeed, it is necessary to remove the data produced near the ends of the lines, since the intensity drops markedly near the ends and this results in discontinuities. Another cause is that ambient conditions are likely to change between the scan of one stripe and the next, producing a mismatch. Also, a phenomenon known as "bleaching" comes into play: the fluorescence background of the spectrum can burn off or bleach as a function of time or laser power, if the sample is left exposed to the laser beam.

### Summary of the Invention

The present invention provides spectroscopic apparatus according to claim 1.

Preferably, data is read sequentially from one end of the row or column of detector elements. In one preferred embodiment, data from each element passes sequentially along the row or column from one element to the next. However, that may not always be quite so, for example if the relative movement between the line focus and the sample is more complex and includes a component in a direction transverse to the longitudinal direction, as well as the movement in the longitudinal direction.

Preferably the detector comprises a two-dimensional array of detector elements, and preferably the analyser disperses the spectrum from any given point or region in the line focus across the detector in a direction orthogonal to said row or column. Thus, data representing multiple wavenumbers spread across the spectrum can be acquired simultaneously, in respective rows or columns of the two-dimensional array, while moving the data for each wavenumber along the respective rows or columns, synchronously with the relative movement of the line focus on the sample.

In another preferred embodiment, the detector may be rotatable through 90°. The detector may then be rotated, when desired, so that the stepping of the data is instead performed in the direction of the dispersion, as described in the above-mentioned US Patent No. 5, 442, 438.

### Brief Description of the Drawings

Preferred embodiments of the invention will now be described by way of example, with reference to the accompanying drawings, wherein:
Fig 1 is a schematic diagram of a first embodiment of spectroscopic apparatus;
Fig 2 is a plan view of an area of a sample to be analysed by the apparatus of Fig 1;
Fig 3 is a graph showing the variation of intensity of a light beam along a line focus in the apparatus of Fig 1;
Figs 4A,4B and 4C respectively show the line focus moving relative to the sample, a corresponding shift of charge within a CCD detector, and a spectrum received from one point in the line focus; and
Fig 5 shows an alternative arrangement of part of the apparatus of Fig 1.

### Description of Preferred Embodiments

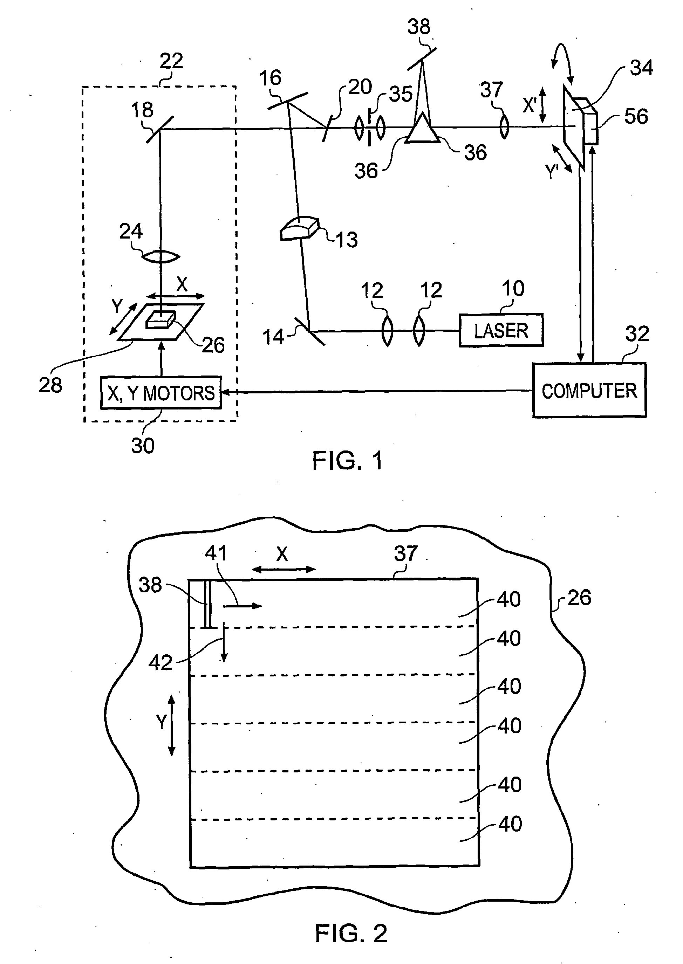

Referring to Fig 1, the spectroscopic apparatus comprises a laser 10 which acts as a source of exciting light. This is passed via a beam expander 12, a cylindrical lens 13, mirrors 14,16,18 and a filter 20 into a microscope 22. An objective lens 24 of the microscope 22 focuses the laser beam onto a sample 26 mounted on a stage or table 28. The stage 28 has motors 30 by which it can be moved in directions X and Y, under the control of a computer 32.

The illumination by the exciting laser beam generates scattered light, e.g. Raman scattered light at different frequencies/wavenumbers. This is collected by the microscope objective 24 and directed towards a two-dimensional photodetector array 34. It passes via the mirror 18, filter 20, a slit 35 (which may act confocally to control the depth resolution of the instrument), mirrors 36, a diffraction grating 38 and a focussing lens 37.

The preferred two-dimensional photodetector 34 is a CCD detector. However, other detectors are possible, such as a two-dimensional CMOS photodetector array. The diffraction grating 38 disperses the spectrum of scattered light across the surface of the CCD 34, in a direction X'.

The filter 20 serves a dual purpose. Firstly, it reflects the exciting laser illumination from the laser 10, so as to inject it into the optical path towards the microscope 22 and sample 26. Secondly, it rejects Rayleigh scattered light having the same frequency as the illuminating laser beam and passes only the Raman spectrum of interest towards the CCD detector 34. A variety of different types of dielectric filter having such properties may be used, including for example a holographic filter (which may be placed at a low angle of incidence to the optical path as shown). If desired, more than one such filter may be provided in series, to improve the rejection of Rayleigh scattered light.

Many of the features of the arrangement described so far are to be found in US Patent No. 5,442,438, which is incorporated herein by reference for further details.

Rather than merely illuminating one single point at a time on the sample 26 with the laser beam, the cylindrical lens 13 is configured so that a line focus is produced. This then illuminates and excites Raman scattering from multiple points on the sample simultaneously.

As shown in Fig 2, typically the area 37 on the sample which is to be analysed has dimensions which are larger than the length of the illuminating line focus 38. Therefore, the line focus 38 is made to perform a raster scan of the area 37. In practice, the relative motion between the line focus of illuminating light and the sample is produced by moving the stage 28 using the motors 30 under the control of the computer 32. Alternatively, however, the illuminating beam itself may be scanned across the surface of a stationary sample, using motorised scanning mirrors to deflect the beams. Again, this is controlled by the computer 32.

In a conventional system, the line focus would first move in the direction X relative to the sample, as indicated by arrow 41, so as to scan a stripe 40. It would then be indexed in the direction Y, as indicated by arrow 42, so as to repeat such scans for successive stripes 40.

However, in the present embodiment, the following method is adopted. Instead of first moving the illuminating line in the X direction orthogonal to its length, it is instead first moved continuously in the Y direction, parallel to its length (i.e. longitudinally). As an alternative to continuous movement, it can instead be moved stepwise, dwelling at each step for a desired exposure period. After each full scan in the Y direction (arrow 42) the line focus is stepped in the X direction (arrow 41) to an adjacent position on the sample, and another scan in the Y direction takes place. This process is repeated until the whole area 37 to be studied has been scanned. This all takes place under the control of the computer 32. It will be appreciated that there are then no stripes 40.

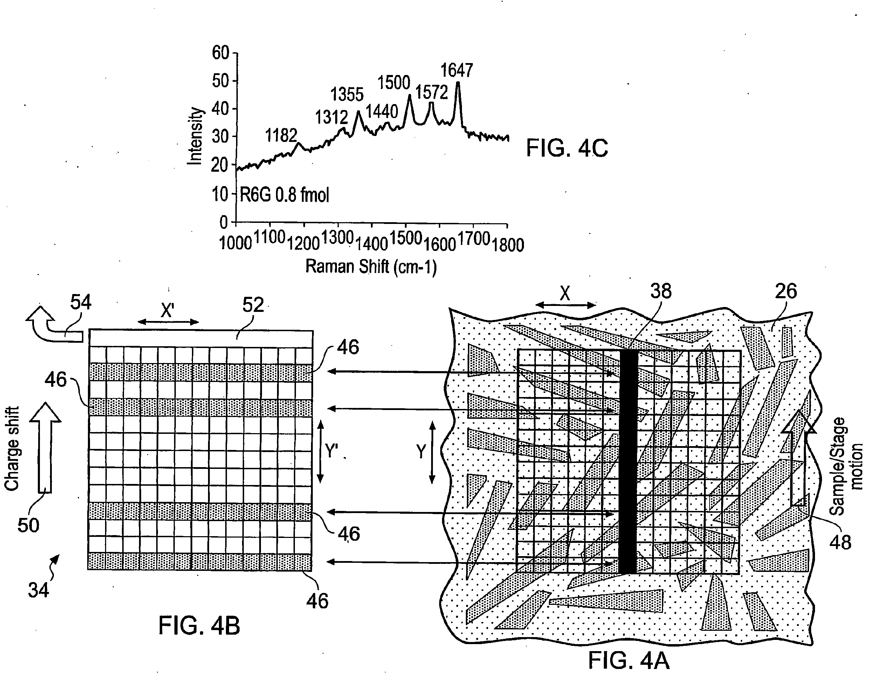

The method used will be further described with reference to Figs 4A, 4B and 4C.

Fig 4A shows a part of the surface of the sample 26, with an imaginary grid of the pixels of the CCD 34 superimposed over it for purposes of discussion. This grid, as shown, covers only a fraction of the area 37 of the sample to be studied. Also shown in Fig 4A is the line focus 38 of the illuminating laser beam. An arrow 48 shows the direction of movement of the sample relative to the line focus 38, as described above.

Fig 4B is a representation of the corresponding array of detector elements (pixels) of the CCD detector 34. For each point in the line 38 in Fig 4A, a Raman spectrum is dispersed in the X' direction along a row of the CCD detector array, for example as illustrated in rows 46. As shown in Fig 4C, this spectrum may correspond to a substance of interest at the corresponding position in the sample 26. It should be understood that the size of the pixels shown in Figs 4A and 4B have been exaggerated, compared to Fig 4C, and that in real life there are many times this number of pixels.

The exposure of a CCD to light results in the accumulation of charge in each detector element (pixel). This charge represents data and is in proportion to the amount of light it has received during the exposure. Normally, this charge is read out sequentially, after the exposure, by passing it from one detector element to the next. At each of these charge shifting steps, the charge from the pixels at the edge of the array is read into a shift register, from where it is read out and transferred to a computer.

In the present embodiment in Fig 4B, the charge is shifted in the direction indicated by arrow 50, in a direction Y' corresponding to the direction Y of the movement of the sample (arrow 48, Fig 4A). It is read one row at a time into a shift register 52, from where it is read out to the computer 32 as indicated at 54. Thus, at any one time during the readout process, the shift register 52 holds the data for one complete spectrum at one point on the line 38.

The shifting of the charge as indicated by arrow 50 takes place simultaneously and synchronously with the scanning of the line 38 in the direction Y as indicated by arrow 48, under the control of the computer 32. The exposure of the CCD to the light continues during this scanning, and charge continues to accumulate as it is shifted from one detector element of the CCD array to the next. Because the charge is shifted synchronously with the relative motion of the sample and the line focus 38, and in the same direction, the light from a given point in the sample 26 continues to accumulate as a spectrum for that point, as shown in Fig 4C. Such synchronous scanning of the CCD and of the stage continues in the Y direction'as indicated by the arrow 42 in Fig 2, until the line focus has traversed the entire length of the area 37 to be analysed.. Then the line focus 38 is stepped to an adjacent position as indicated by arrow 41, and the same procedure takes place until a raster scan has been built up of the entire area 37.

Reference has been made to the accumulation of charge (data) from a point in the sample 26. However, in a lower resolution system, charge may be accumulated from a small area or region of the sample.

There are several advantages to the technique described above.

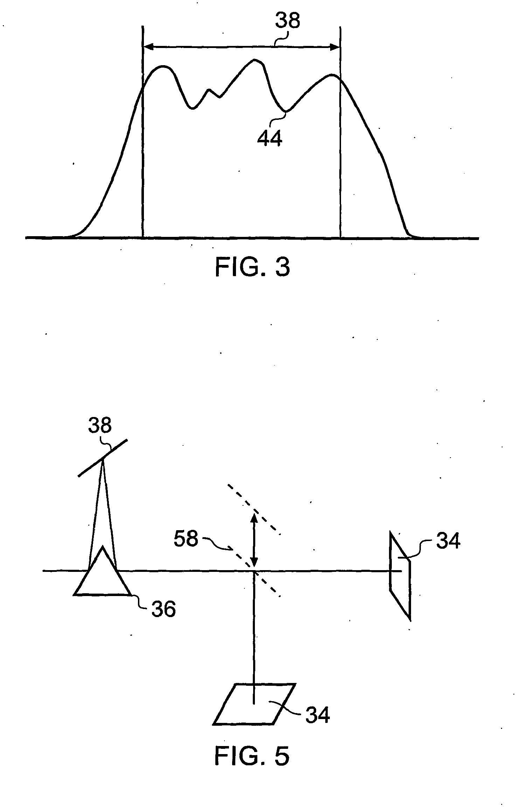

A first advantage will be explained with reference to Fig 3. This shows the intensity characteristic of the illuminating laser beam along the length of the line focus 38. Ideally of course, it would be a "top hat" function, having uniform intensity throughout the length of the line 38. In reality, however, this is not possible, and so the intensity curve 44 varies from one position along the line to another. The result, in the conventional technique, is that spectra taken simultaneously from different points along the line have different intensities. This makes it difficult to perform a quantitative analysis which compares the spectra, and to deduce the molecular composition and other information about the various illuminated points along the line. To achieve an appropriate "top hat" function would require a point source laser with a diffractive optical element, which would be expensive.

With the present technique, however, any given point on the sample 26 is illuminated successively by light from each position within the length of the line focus 38. Thus, each point on the sample experiences illumination from each of the differing intensities shown by the curve 44 in Fig 3. The effect is to integrate all these intensities so that the differences between them have no effect.

A second advantage is that there is a smooth transition of the illuminating line 38 throughout the Y direction of the area 37, so that no differences are perceived between different stripes 40 as in the prior technique described. The data is acquired seamlessly and there is no need to try to stitch together data at the edges of strips 40.

A third advantage is that should there be any differences between the responses of different detector elements of the CCD array 34, or variations in instrument transfer function between different pixels, then these too are integrated over the whole area of the sample. So this has no effect on the resulting output as it would in the prior art, and facilitates accurate analysis of the results. Indeed, even a defective detector element which gave no signal output could be tolerated.

A fourth advantage is that scanning a line focus results in faster mapping of the sample area, compared to point-by-point scanning. In cases where a large sample area is to be mapped with only a short exposure time at each point, then it can be shown that the present method is even faster than the previously known method of line focus scanning.

It will be noted that the direction 50 of the charge shift in Fig 4B is orthogonal to the prior art synchronous scanning method described with reference to Fig 8 of US Patent No. 5,442,438. In that prior method, the charge is shifted in the direction of the spectral dispersion, corresponding to the direction X' in Fig 4B of the present application. Thus, the present invention achieves a different effect from that described in the prior patent.

The computer 32 is programmed to control the shifting of the charge synchronously with the movement of the motors 30. It also controls the readout 54 from the shift register 52 and the resulting data acquisition. If it is desired to produce the relative motion of the line focus 38 and the sample by scanning the light beam across a stationary sample, the computer 32 may control the scanning mirrors which cause the scanning of the illuminating beam and which collect the scattered light from a sample.

If it is desired to have the ability to provide the synchronous scanning described in the embodiment above, as well as the synchronous scanning in the spectral dimension as described in US Patent No. 5,442,438, then there are several possibilities.

One such possibility is to utilise a CCD detector array which has the ability to shift charges in both the X' and Y' directions, to respective shift registers on orthogonal edges of the array. The charges can then be shifted in the Y' direction as described above, or in the X' direction if it is desired to perform the method according to the prior patent.

Alternatively, as shown in Fig 1, the CCD detector 34 may be mounted on an optional rotatable mounting 56. This is indexable through 90°, between a position in which it can perform the method described above, and an orthogonal position in which it can perform the method of the prior patent. To ensure repeatable repositioning of the detector at each of the two orthogonal positions, the rotatable mounting may comprise kinematic mounts at each of the two indexed positions. If desired, the rotatable mounting 56 may be motorised and under control of the computer 32 to change the scanning mode from one position to the other.

Alternatively, as shown in Fig 5, two CCD detectors 34 may be used. One is set up to perform the technique as described above, while the other is set up to perform the technique of the prior patent. The light may be switched from one detector to the other by a movable mirror 58, which can be moved into and out of the beam path. Again, this may be motorised and under the control of the computer 32, if desired. Further methods of switching between one CCD detector and another are possible, such as mounting both of them side-by-side on a linear slide so that the desired one can be positioned in the optical path.

## Claims

1. Spectroscopic apparatus comprising:
a source of exciting light arranged to produce a line focus on a sample area to be analyzed which has dimensions which are larger than the length of the illuminating line focus and to generate therefrom a spectrum of scattered light, the line focus and the sample being movable relative to each other;
a detector having multiple detector elements arranged in at least one row or column;
an optical path between the sample and the detector, the line focus and the row or column being aligned such that light scattered from different portions of the line focus is directed to respective different detector'elements within the row or column;
**characterised in that** the line focus is arranged to move, relative to the sample, at least in a longitudinal direction of the line focus;
and that, synchronously with the relative movement in the longitudinal direction of the line focus over the sample, data is shifted within the detector so that data from a given point or region of the sample accumulates during the relative movement until the entire length of the area of the sample to be analysed has been traversed before the line focus is stepped to an adjacent position.

2. Spectroscopic apparatus according to claim 1, wherein data is read sequentially from one end of the row or column of detector elements.

3. Spectroscopic apparatus according to claim 1 or claim 2, wherein data from each element passes sequentially along the row or column from one element to the next.

4. Spectroscopic apparatus according to any one of the preceding claims, wherein the detector comprises a two-dimensional array of detector elements.

5. Spectroscopic apparatus according to claim 4, wherein the detector comprises a charge-coupled device.

6. Spectroscopic apparatus according to claim 4 or claim 5, wherein the analyser disperses the spectrum from any given point or region in the line focus across the detector in a direction orthogonal to said row or column.

7. Spectroscopic apparatus according to claim 6, wherein data representing multiple wavenumbers spread across the spectrum is acquired simultaneously, in respective rows or columns of the two-dimensional array, while moving the data for each wavenumber along the respective rows or columns, synchronously with the relative movement of the line focus on the sample.

8. Spectroscopic apparatus according to claim 6 or claim 7, wherein the detector is rotatable through 90°, whereby the detector may be rotated, when desired, so that shifting of the data may be performed in the direction of the dispersion of the spectrum.

9. Spectroscopic apparatus according to any one of the preceding claims, wherein the spectrum is a spectrum of Raman scattered light.

## Patentansprüche

1. Spektroskopische Vorrichtung, umfassend:
eine Quelle für erregendes Licht, die derart angeordnet ist, um einen Strichfokus auf einer zu analysierenden Probenfläche zu erzeugen, die Abmessungen besitzt, die größer als die Länge des beleuchtenden Strichfokus sind, und um daraus ein Spektrum von gestreutem Licht zu erzeugen, wobei der Strichfokus und die Probe relativ zueinander bewegbar sind;
einen Detektor mit mehreren Detektorelementen, die in zumindest einer Reihe oder Spalte angeordnet sind;
einen optischen Pfad zwischen der Probe und dem Detektor, wobei der Strichfokus und die Reihe oder Spalte derart ausgerichtet sind, dass Licht, das von verschiedenen Abschnitten des Strichfokus gestreut wird, zu jeweiligen verschiedenen Detektorelementen innerhalb der Reihe oder Spalte gerichtet ist;
**dadurch gekennzeichnet, dass**
der Strichfokus derart angeordnet ist, dass er sich relativ zu der Probe zumindest in einer Längsrichtung des Strichfokus bewegt; und dass synchron mit der relativen Bewegung in der Längsrichtung des Strichfokus über die Probe Daten innerhalb des Detektors verschoben werden, so dass sich Daten von einem gegebenen Punkt oder Gebiet der Probe während der relativen Bewegung so lange ansammeln, bis die gesamte Länge der Fläche der zu analysierenden Probe durchlaufen worden ist, bevor der Strichfokus zu einer benachbarten Position geschaltet wird.

2. Spektroskopische Vorrichtung nach Anspruch 1,
wobei Daten sequentiell von einem Ende der Reihe oder Spalte von Detektorelementen gelesen werden.

3. Spektroskopische Vorrichtung nach einem der Ansprüche 1 oder 2,
wobei Daten von jedem Element sequentiell entlang der Reihe oder Spalte von einem Element zu dem nächsten verlaufen.

4. Spektroskopische Vorrichtung nach einem der vorhergehenden Ansprüche,
wobei der Detektor eine zweidimensionale Gruppierung von Detektorelementen umfasst.

5. Spektroskopische Vorrichtung nach Anspruch 4,
wobei der Detektor eine ladungsgekoppelte Vorrichtung umfasst.

6. Spektroskopische Vorrichtung nach einem der Ansprüche 4 oder 5,
wobei der Analysator das Spektrum von einem beliebigen gegebenen Punkt oder Gebiet in dem Strichfokus über den Detektor in einer Richtung orthogonal zu der Reihe oder Spalte dispergiert.

7. Spektroskopische Vorrichtung nach Anspruch 6,
wobei Daten, die mehrere Wellenzahlen darstellen, die über das Spektrum verteilt sind, gleichzeitig in jeweiligen Reihen oder Spalten der zweidimensionalen Gruppierung erfasst werden, während die Daten für jede Wellenzahl entlang der jeweiligen Reihen oder Spalten synchron mit der relativen Bewegung des Strichfokus an der Probe bewegt werden.

8. Spektroskopische Vorrichtung nach einem der Ansprüche 6 oder 7,
wobei der Detektor um 90° drehbar ist, wodurch der Detektor nach Bedarf gedreht werden kann, so dass ein Verschieben der Daten in der Richtung der Dispersion des Spektrums ausgeführt werden kann.

9. Spektroskopische Vorrichtung nach einem der vorhergehenden Ansprüche,
wobei das Spektrum ein Spektrum von Raman-gestreutem Licht ist.

## Revendications

1. Dispositif spectroscopique comprenant :
une source de lumière d'excitation agencée pour produire un foyer linéaire sur une zone d'échantillon à analyser qui a des dimensions qui sont supérieures à la longueur du foyer linéaire d'éclairage et pour générer à partir de celui-ci un spectre de lumière diffusée, le foyer linéaire et l'échantillon pouvant être déplacés l'un par rapport à l'autre ;
un détecteur comportant de multiples éléments de détection agencés en au moins une rangée ou colonne ;
un trajet optique entre l'échantillon et le détecteur, le foyer linéaire et la rangée ou colonne étant alignés de sorte que la lumière diffusée à partir de différentes parties du foyer linéaire soit dirigée vers différents éléments de détecteur respectifs dans la rangée ou colonne ;
**caractérisé en ce que** le foyer linéaire est agencé pour se déplacer, par rapport à l'échantillon, au moins dans une direction longitudinale du foyer linéaire ;
et **en ce que**, en synchronisation avec le mouvement relatif dans la direction longitudinale du foyer linéaire sur l'échantillon, les données sont décalées dans le détecteur de sorte que les données provenant d'un point donné ou d'une région donnée de l'échantillon s'accumulent pendant le mouvement relatif jusqu'à ce que la longueur entière de la zone de l'échantillon à analyser ait été parcourue avant que le foyer linéaire ne soit déplacé par pas vers une position adjacente.

2. Dispositif spectroscopique selon la revendication 1, dans lequel les données sont lues séquentiellement à partir d'une extrémité de la rangée ou colonne d'éléments de détecteur.

3. Dispositif spectroscopique selon la revendication 1 ou la revendication 2, dans lequel les données provenant de chaque élément passent séquentiellement le long de la rangée ou colonne d'un élément au suivant.

4. Dispositif spectroscopique selon l'une quelconque des revendications précédentes, dans lequel le détecteur comprend un ensemble bidimensionnel d'éléments de détecteur.

5. Dispositif spectroscopique selon la revendication 4, dans lequel le détecteur comprend un dispositif à couplage de charges.

6. Dispositif spectroscopique selon la revendication 4 ou la revendication 5, dans lequel l'analyseur disperse le spectre à partir d'un point donné ou d'une région donnée quelconque du foyer linéaire à travers le détecteur dans une direction orthogonale à ladite rangée ou colonne.

7. Dispositif spectroscopique selon la revendication 6, dans lequel des données représentant de multiples nombres d'ondes étalés sur le spectre sont acquises simultanément, dans des rangées ou colonnes respectives de l'ensemble bidimensionnel, tout en déplaçant les données pour chaque nombre d'ondes le long des rangées ou colonnes respectives, en synchronisation avec le mouvement relatif du foyer linéaire sur l'échantillon.

8. Dispositif spectroscopique selon la revendication 6 ou la revendication 7, dans lequel le détecteur est capable de tourner de 90°, moyennant quoi le détecteur peut être tourné, lorsqu'on le souhaite, de sorte que le décalage des données puisse être effectué dans la direction de la dispersion du spectre.

9. Dispositif spectroscopique selon l'une quelconque des revendications précédentes, dans lequel le spectre est un spectre de lumière Raman diffusée.
